(19) **Europäisches Patentamt**

**European Patent Office**

**Office européen des brevets**

(11) **EP 0 981 765 B1**

(12) **EUROPEAN PATENT SPECIFICATION**

(45) Date of publication and mention
of the grant of the patent:
**16.06.2004 Bulletin 2004/25**

(51) Int Cl.⁷: **G01T 1/29**, G01T 7/00

(21) Application number: **98922918.2**

(86) International application number:
**PCT/GB1998/001398**

(22) Date of filing: **15.05.1998**

(87) International publication number:
**WO 1998/052071 (19.11.1998 Gazette 1998/46)**

(54) **IMPROVEMENTS IN AND RELATING TO MONITORING**

VERBESSERUNGEN AN ODER IN BEZIEHUNG ZU EINER ÜBERWACHUNGSANORDNUNG

PERFECTIONNEMENTS RELATIFS A LA DOSIMETRIE

(84) Designated Contracting States:
**BE DE FR GB**

(30) Priority: **15.05.1997 GB 9709817**

(43) Date of publication of application:
**01.03.2000 Bulletin 2000/09**

(73) Proprietor: **British Nuclear Fuels PLC
Warrington, Cheshire WA3 6AS (GB)**

(72) Inventors:
• **LIGHTFOOT, John, Adrian,
BNFL Instruments Limited
Calderbridge, Cumbria CA20 1DP (GB)**
• **HUGHES, Karl, Anthony,
BNFL Instruments Limited
Calderbridge, Cumbria CA20 1DP (GB)**

(74) Representative: **Pawlyn, Anthony Neil
Urquhart-Dykes & Lord
Tower North Central
Merrion Way
Leeds LS2 8PA (GB)**

(56) References cited:
**EP-A- 0 542 561        EP-A- 0 743 538
US-A- 5 204 533**

• **REDUS R ET AL: "AN IMAGING NUCLEAR
SURVEY SYSTEM" IEEE TRANSACTIONS ON
NUCLEAR SCIENCE, vol. 43, no. 3, PART 02,
June 1996, pages 1827-1831, XP000642412**

**Description**

This invention concerns improvements in and relating to monitoring, particularly the monitoring of radiation dose and dose rate.

Three principle ways of expressing radiometric measurements exist, namely activity, count and dose.

In general terms activity is a measure of the amount of radioactive material present within an environment. Activity is measured in Becquerels (Bq) where 1Bq is 1 nuclear disintegration per second.

Counts relate to the counting rate of a radiation detector, such as a scintillator, in a gamma flux. The count rate equates to the number of gamma photons depositing some energy in the detector in each second. By recording such information over a period of time a recorded spectrum relating to the given.energy range is obtained.

Dose relates to the interaction of gamma rays with living tissue. Dose is a measurement of the energy deposited in the tissue by gamma ray flux and is measured in Sieverts (Sv) where 1Sv is 1 Joule per kilo. Dose relates to a specific spatial point and is derived from all gamma rays arriving at that point. Dose rate is proportional to the number and energy of the gamma photons arriving at a point in a second. Dose and dose rate measurements are of fundamental importance in the nuclear industry and in other radiological environments as they are the basis of most health and safety legislation relating to working environments and exposure.

Instruments exist which allow the determination of dose at a point in space. However, each such system relies on a detector for gamma flux being presented to the particular point for which the dose or dose rate determination is required. Thus in determining the dose or dose rate variation for a substantial volume a very large number of measurements are required. Unfortunately, the dose at any one particular point is unrelated to the dose at other points within an environment, particularly where the geometry of the environment, objects present in the environment and shielding effects are taken into account.

The present invention aims to provide an instrument which is capable of allowing dose, dose rate or an approximation thereto to be determined for an environment by scanning such an environment and without presenting a detector at that location.

EP-A-0542561 provides a radiation survey device for which it is suggested that radiation information can be overlain with video images. No determination of an emitted spectrum is provided. No suggestion as to the determination of dose for points aside from those from which measurements are taken is suggested.

According to a first aspect of the invention we provide a method for determining dose or dose rate for one or more selected locations within an environment, comprising the steps of:-

    a) measuring incident gamma ray energy and count rate from one or more sources, for one or more viewed portions of the environment, at one or more measured locations within the environment to obtain a measured spectrum for those measured locations;

    b) measuring the spatial position of the measured locations;

    c) determining an emitted spectrum for each viewed portion of the environment from the measured spectrum for each viewed portion of the environment;

    d) inputting the emitted spectrum and measured location information to data processing means; and

    e) determining the dose rate at one or more selected locations from the calculated total gamma ray energy incident on those one or more selected locations arising from the emitted spectrum of the one or more sources.

In this way the invention provides an accurate solution for the dose rate at any point of interest within the environment based on the measured count and incident energies.

Preferably the measured count is determined using a remote controlled assembly. Preferably the assembly includes a gamma detector, for instance of the scintillator or semiconductor type. A caesium iodide scintillator offers one such device. Preferably the gamma detector is collimated. In this way directional sensitivity is provided. The collimator may be of tungsten. Preferably the collimator provides a plane angle of between 10 and 1 degrees. A series of collimators of discrete values may be provide. Suitable angles include 2, 4 and 9 degrees.

The assembly may further include a video camera to provide visual images of the environment to the user. The video images may include details of the area under investigation by the collimated detector. Recordal facilities for the video images may be provided.

Preferably the gamma detector can be moved to view different portions of the environment. A tilt and/or pan movement may be provided for the detector and collimator.

Preferably the gamma detector measures a plurality of different energy ranges within the spectra under consideration. Preferably the regions of interest provide a continuous sequence for analysis across the spectra range of interest.

Preferably the gamma detector analyses a location within the environment and then analyses further locations within the environment. Preferably the gamma detector scans from one location to the next. A raster style scan is preferred.

Preferably the gamma detector analyses locations within the environment equally. Analysis may be provided by analysing locations equally spaced from one another in terms of pan angle and/or tilt angle. More equal analysis may be provided by weighting analysed locations in an environment. Preferably more locations are sampled at or towards the equator of the detector scan than at or towards the poles of the detector scan. Preferably the number of analysed locations in the pan direction at varying tilt angles is proportional to the cosine of the tilt angle. The number of analysed locations in the pan direction, at a given tilt angle, may vary from a maximum at the equator to one or zero locations at the pole or poles.

Preferably the gamma detector is fixedly directed at the location to be monitored during analysis of that location.

Preferably a given location may overlap or at least abut an adjoining location. A separation between measured locations may be tolerated. Additional consideration of certain areas may be provided within the environment to determine whether those areas, for instance hot spots, are attributable to point source or spread area source types. The source type has a significant effect on the dose near to those locations, but such a technique may avoid over detailed scanning were it is not needed to achieve the required accuracy. Additional scanning of such locations may be conducted using a collimator with a reduced plane angle. Alternatively or additionally measurements may be conducted by advancing the area considered by less than the plane angle of the collimator. Over sampling in this way may provide increased spatial resolution.

Preferably generally circular areas, or projections of a circular area are determined. The environment may be scanned in a series of rows and/or columns.

The environment or portions thereof may be scanned from a series of detector locations. The relationship between the detector locations is preferably determined. Moving the detector from one location to another allows full inspection of an environment, for instance behind objects obscuring parts of the environment from a first position.

The source location may be considered as a discrete point or as an area. The source results evaluated may be attributed to the area or to a discrete point, such as its centre, or a series of points within the area. The area or points to which a source is attributed may be a function of the viewing angle of the collimator relative to that area and/or the range from the collimator of that area.

The location position is preferably determined in three dimensions. The location may be determined by the tilt and pan position of the gamma detector. The location may also be determined in terms of the locations distance from the gamma detector. The method may employ a range finding device to determine the location distance. A laser range finder may be employed. Preferably a position based on the combined information is employed. The positional information may be converted to cartesian coordinates for further processing.

Preferably the measured spectra is divided into a series of energy ranges. Preferably the ranges are continuous with one another. Preferably the ranges are of equivalent extent to one another. Preferably energy ranges of 100keV divisions are employed. Preferably the count rates falling within a range are summed to give a total count for that range.

Preferably the ranged or binned measured spectra is analysed to determine the contributing energies.

The analysis may comprise spectrum stripping. Preferably the analysis is performed on the highest energy level bin first. Preferably each remaining bin is then analysed in descending energy order.

Preferably an energy bin is analysed by subtracting from the spectrum a value based on a response function multiplied by a variable factor to reduce the bin under analysis to zero. Preferably the highest remaining energy bin still contributing to the spectra after subtraction is analysed next. Preferably the process is repeated to reduce the complete spectra to zero.

Preferably in the bin analysis each bin is considered as having the energy level of its mid point.

The response function may be an indication of the detector response to a mono-energetic source having an energy corresponding to the mid point energy for the bin under analysis.

Preferably the response function used in the analysis is a function of the energy value under consideration. Preferably the response functions are predetermined for the method. The response functions may be determined by modelling of the apparatus used for the method. The response values may be predetermined by evaluating the response of the detection method to a range of gamma ray energies. Preferably the response is evaluated for each energy bin employed in the analysis. Preferably a response every 100keV is determined. Preferably a range of response in the range 50keV to 1450keV is determined, most preferably in 100keV steps.

Preferably the variable factor is adjusted to equate its multiple with the response factor to the bin under analysis. The subtraction of the bin from the spectrum may also lead to subtraction or reduction in the remaining contribution to the spectrum in other bins.

The analysis of the binned spectra may comprise an iterative process.

A determination may be made based on a comparison of the response functions multiplied by variable factors with a measured spectrum.

The fit at one set of variable factors may be compared with the fit at a different set of variable factors. A further set of variable factors may be considered against the measured spectrum. The further set of variable factor values may be determined by the relative result of a preceding set or sets of variable factors to the measured spectrum.

The comparison may be based on a goodness of fit test, such as a chi-squared test. Comparisons may be continued with variations in the variable factor values until the difference between generated and measured spectrum is minimised or reduced below a given threshold.

The value of the variable factor for one or more response functions may be varied between sets.

Preferably the variable factor determined for each response value gives the emitted spectrum. Preferably the emitted spectrum is the summation of the multiples of each response function by its variable factor.

The analysis of the spectra may be conducted by a spreadsheet software package.

Preferably the analysis results in one or more emission energy values and an intensity value for each emission energy value. Preferably the analysis results are considered as the emitted spectra.

The process may be repeated for a plurality and more preferably all of the discrete locations.

The data processing means may comprise specific machine code or spreadsheets or other software or hardware intended to calculate dose based on separations and spectra. The processing means may accommodate information relating to the spatial configuration of the environment.

The source locations and intensities or spectra may be inputted to a computer model of the environment under analysis. Preferably the source locations are attributed to surfaces within the modelled environment.

The processing means or model may determine dose and/or dose rates based on calculation of the behaviour/effect of a large number of photons from each source according to its characteristics. For dose rate, for instance, the number and energy of those photons incident on the location may be considered. The location may be evaluated as a volume.

The processing means or model may attribute each source spectra to a point source within the environment. Such a system may determine dose and/or dose rate based on the use of flux to dose conversion factors.

Preferably the processing means or model provides visualisation of the environment and/or the source locations and/or the source types and/or diagnostic information on the source. The visualisation may be provided in three and/or two dimensions. The visualisation may include video images of the environment.

Preferably the processing means or model accounts for the shape and/or relative position and/or shielding effect and/or attenuating effect and/or dissipating effect and/or first order scattering effect and/or second order scattering effect of the components of the environment.

The dose rate at a location is preferably determined by summing the contribution of all the source locations emitted spectra determined to that point. The dose rate can be determined for any point within the environment based on the source information determined by the analysis and the distance of the location from each of the sources. The model or processing means may account for environmental effects on the emitted spectra from the various locations and contributing to that point.

The dose rate calculated for a plurality of locations within the environment may be used to generate contour or other plots of dose rate over a part or the whole of the environment. The plots may be presented in 2D or 3D, for instance 2D slices through the environment.

The environment may be any one or more of a vessel, a container, a room, a building, a stack, a location or any other volume desiring analysis.

According to a second aspect of the invention we provide A dose or dose rate determining apparatus for one or more selected locations within an environment, the apparatus comprising:

> a) means for measuring incident gamma ray energy and count rate from one or more sources, for one or more viewed portions of the environment, at one or more measured locations within the environment, the apparatus obtaining a measured spectrum for the measured locations from this information;
> b) means for measuring the spatial position of the measured locations;
> c) calculating means for determining an emitted spectrum for each viewed portion of the environment from the measured spectrum for each viewed portion of the environment;
> d) processing means adapted to receive inputs corresponding to the emitted spectrum and measured location information; and
> e) calculating means for determining the dose rate at one or more selected locations from the total calculated gamma ray energy incident on those selected location arising from the emitted spectrum of the one or more sources.

The apparatus may include means or devices for performing or embodying any of the process and method steps described elsewhere in this application. The apparatus may include details of apparatus set out in the first aspect of the invention. The processing means and calculating means may be on and the same.

Various embodiments of the invention will now be described by way of example only, and with reference to the accompanying drawings in which:-

Figure 1 illustrates a radiometric measuring array suitable for the present invention;
Figure 2 illustrates output information from the measuring apparatus;
Figure 3 illustrates the difference between a measured spectra and emitted spectra across a range of energy values;
Figure 4 illustrates a bin spectra for Cs-137;
Figure 5 illustrates a comparison between a measured spectrum, a generated spectrum and an iteratively modified generated spectrum;
Figure 6 illustrates a response function for 1200-1300keV using 1250keV gamma ray source modelled on MCNP;
Figure 7 shows a complete set of response functions obtained from the MCNP model;
Figure 8 illustrates a 2D slice through an environment indicating dose contour plots present invention;
Figure 9 illustrates an MCNP generated, binned spectrum for Co-60;
Figure 10 illustrates an emitted spectra calculated from the determined spectra of Figure 8;
Figure 11 illustrates the variation of dose uptake across gamma ray energy spectra;
Figure 12 illustrates a Cs-137 gamma spectra generated by model MCNP;
Figure 13 illustrates a broadened spectrum produced from the spectrum of Figure 11;
Figure 14 illustrates a binned gamma spectrum for a Cs-137 source experimentally determined;
Figure 15 illustrates a model determined Cs-137 spectra;
Figure 16 shows an emitted spectra obtained from processing the spectra of Figure 13;
Figure 17 compares the dose values obtained from the present technique with a prior art instrument placed at the location of interest;
Figure 18 provides the comparison of Figure 16 for a total count rate against dose rate observation;
Figure 19 shows the comparison of Figure 16 based on a measured spectrum being taken as equivalent to the emitted spectra; and
Figure 20 illustrates a dose rate contour plot for an environment analysed according to the present invention.

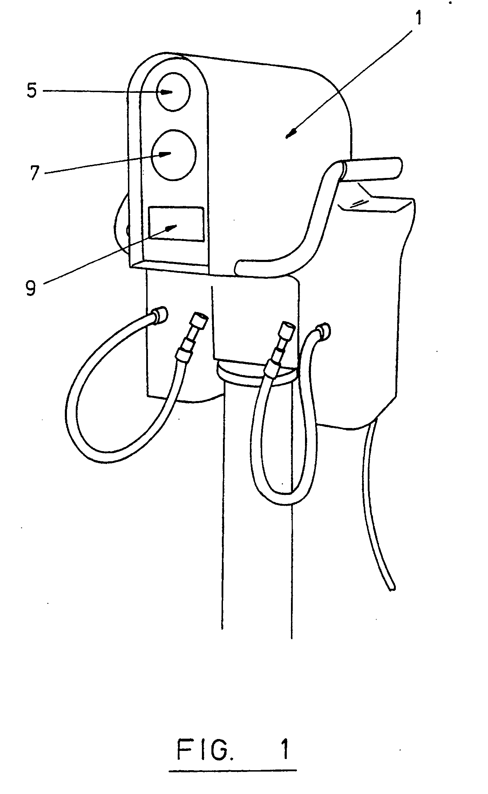

As a initial point it is necessary to obtain radiometric measurements relating to the environment under consideration. These are possible using a count rate detection assembly. Such apparatus includes an inspection head 1 of the type illustrated schematically in Figure 1. The inspection head 1 is connected to a remote operator console, not shown. The head 1 is capable of pan and tilt movement controlled from the console by the operator or automatically according to a predetermined program. The head 1 includes a gamma detector 5, in this case a tungsten collimated caesium iodide scintillator, a video camera 7 and a laser range finder 9. The tungsten collimator containing the detector has an aperture with a plain angle width of 4°, but additional, exchangeable, collimators with widths 9° and 2° are also provided. The operator console includes a computer to process data, a video display unit, VDU, and video cassette recorder, VCR. The VDU displays the video image from the camera on the head 1 and a circle is superimposed upon this to indicate the field of view of the collimated scintillator. The console also receives information concerning the pan and tilt angles of the head and the range to the object in the centre of the field of view determined by the laser range finder 9.

The VCR is used to record the contents of the VDU screen and allows recall of the video data at a later date or the replay of previous scans through the console.

The scanning operation of the head can be controlled manually through the console, but automatic scanning is preferred for generating the data inputs for the present invention. A rectilinear raster scan across the area from top left to bottom right is preferred with varying dwell time and pitch according to the operating parameters of the invention.

In a preferred scanning regime the number of locations analysed decreases for a given tilt angle, as the tilt angle increases, according to the cosine of the tilt angle to the equatorial plane.

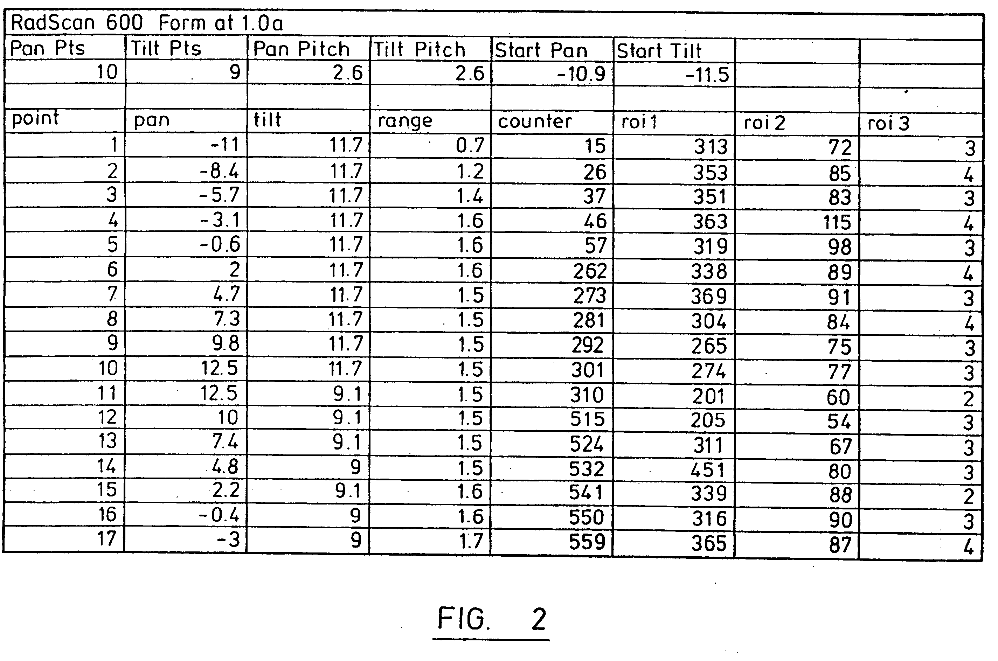

During operation the instrument outputs data to an output file which includes the pan and tilt angles of the head, the range finder distance and count rates of different energy bands originating in the region of interest. A sample of such information is disclosed in Figure 2, a larger number of energy bands are likely to be monitored in practice to cover the full energy range of the spectra. A multichannel analyser, for instance MAESTRO available from EG&G Ortec, may be used to receive the values for the various ranges.

The monitoring apparatus thus provides a measure of the count rate and the energy deposited by each interacting photon at the detector. The contribution from gamma radiation along a narrow angle of incidence only is determined, contrary to the majority of prior art health physics instruments which are sensitive to radiation from all directions.

The present invention enables count rate and energy data to be successfully used to determine a dose map, based on dose, or dose rate to be determined for a given point, without direct monitoring at that point for the first time. The system employs processing of the data obtained from the apparatus with a view to determining the effects of a detector and its collimator which give rise to the measured spectrum, so as to produce an emitted spectrum for each point in the environment. Additionally, the system incorporates the emitted spectra into a computer model of the environment and from this model a map of the resulting dose can be calculated or the dose rate at a given point predicted. The dose rate is based on the combined effect of the gamma spectrum emitted from each point in the environment on the point of interest.

To obtain the required result the environment in question should be accurately scanned in a regimented manner. The automated scanning regime preferred for the present invention is one of rasta scanning with a series of points, which may include an area about them, being measured to cover the area. A trade off between the frequency of the points and the time taken for the scan is to be made. The more frequent the points are measured, and hence the lower the gap between points, then the more thoroughly the environment will be measured. A degree of overlap by selecting a suitably small pitch selection gives maximum accuracy as full analysis is provided. An increased measurement time arises as a result, however. In the alternative scenario too large a pitch and the resulting gaps between measurement areas, can cause inadequate measurement of the environment.

To obtain an accurate determination measurements must be made over the whole, or at least the significant, part of the spectrum which is contributing to the dose. A range of 30 keV to 2000 keV is sufficient for most applications, but a reduced range of 150 keV to 1500 keV can be tolerated in certain circumstances.

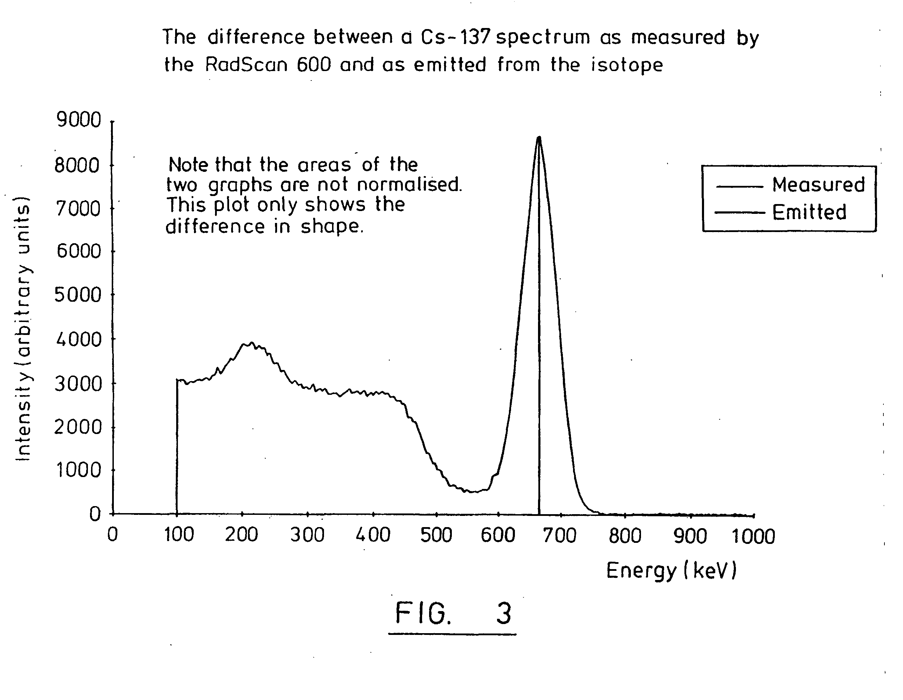

Having obtained the measured spectra it is imperative to calculate the actual emitted gamma spectra for the environment across the whole spectra. The measured/recorded spectra can differ substantially from the emitted/incident spectra. The variation in the difference between the two is illustrated in Figure 3. Dose rate assessments based on assuming measured spectra equate to emitted spectra will lead to substantial dose rates underestimates which may not be tolerable. The extent of underestimation increases as the emitted gamma ray energy increases.

The production of emitted gamma spectra from measured spectra can be based on a modified version of a technique designated, spectrum stripping.

The basic technique considers the response functions of the instrument in question, determined either from calibration source measurements or calculation, against the spectra. The measured spectrum obtained in practice is unpeeled by starting with the highest energy level part of the spectra. A response function is derived for the said energy level of the bin function. The response function to this is multiplied by a variable factor and subtracted from the recorded spectrum to reduce the upper end of the spectrum to zero. The contribution from that energy source type is evaluated based on this variable factor compared with other variable factors for other parts of the spectra. The technique then progress to next lower energy anticipated which is then selected and stripped from the spectrum in a similar process. By repeating the process over and over the entire recorded spectrum is reduced to zero and accounted for in terms of a variety of energy level contributions. The multiplication factor by which each response function was multiplied to equate to the measured spectrum gives the relative intensity of that component.

Unfortunately in real world environments, such as those found on nuclear plants, the energies contributing to a spectrum are not formed of a series of mono-energetic sources. Energy components from scattered and penetrating radiation also contribute to the spectrum.

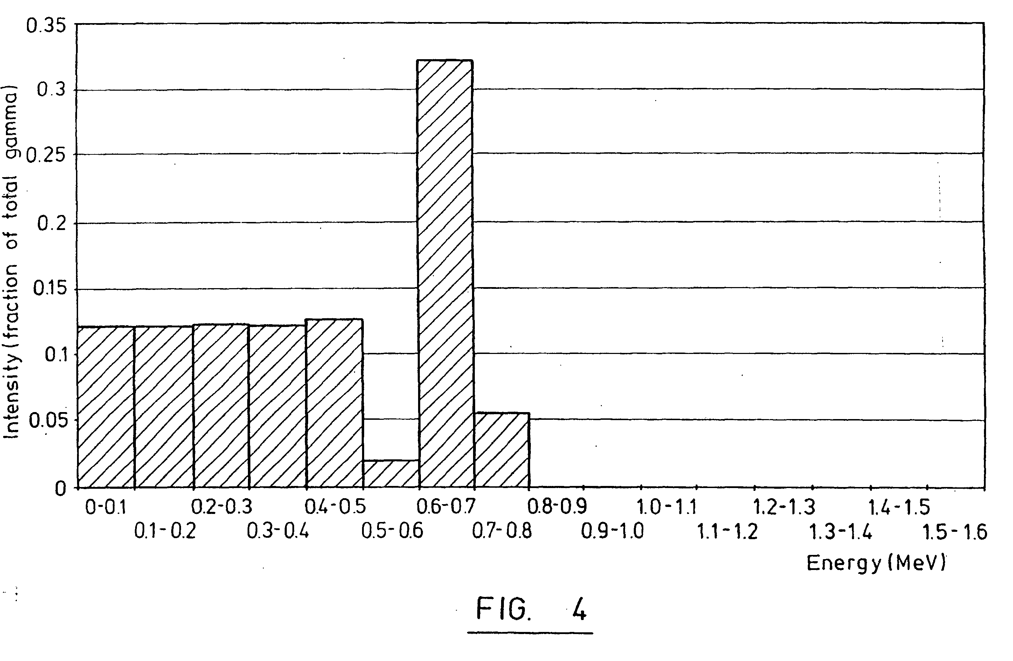

To account for such non-mono-energetic spectra components a generic spectrum stripping algorithm was developed. In analysing a radiation field the spectra are grouped into bins of a predetermined energy width, generally 100 keV. For a 30 keV to 2000 keV spectrum, 15 discrete energy bands are normally sufficient. Such a binned spectrum is shown in Figure 4 for Cs-137.

Each bin spectrum is then subjected to a spectrum stripping technique of the type described above so as to work down in energy until all of the energy bins have been stripped. The result of this is a series of factors corresponding to the incident gamma flux.

The technique treats each bin as a source whose energy is the mean energy of that bin. Thus the mixed field distribution occurring in practice is approximated to a number of discrete, uniformly spaced, energies of intensity corresponding to the mean, and hence known. The end result is that if a spectrum can be recorded and stripped in this manner for each measurement point of a scan then at any point the dose rates for dose maps can be determined.

In an alternative technique an emitted spectrum can be obtained from a measured spectrum based on an iterative process.

The process relies on response functions of the type discussed above, with the emitted spectrum being considered as the summation of the response functions multiplied by variable factors. A calculated version of these variable factors can be determined from the measured spectrum by repeated comparison.

The measured spectrum is binned in the manner described above and the mid point energy level response function for each bin is determined from pre-stored data.

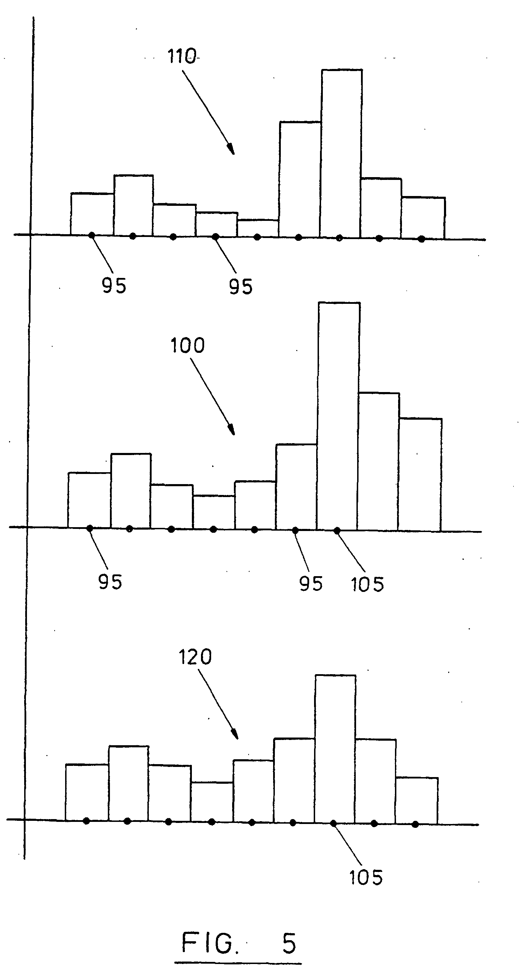

A comparative spectrum is generated, based on each response function 95 being multiplied by a variable factors, each variable factor being set at an initial level. As seen in Figure 5 the sum arising 100 is compared with the corresponding measured spectrum 110.

One or more of the variable factors can then be altered and the process repeated. In this example the variable for response function 105 is reduced to bring that point of the spectrum close to the measured spectrum 110.

A comparison, such as chi-squared goodness of fit, can be made between the initial 100 and subsequent response 120 to measured 110 fit. The relative result is used to determine the subsequent adjustments until a threshold accuracy/fit value is crossed at which put the process is stopped.

The level of the factors of each of the response factors determined in the results gives the emitted spectrum.

The stripping of a spectrum as discussed above, in either method is reliant on a response function for each of the energy bins presented in the measured spectra. As previously stated mono-energetic gamma ray sources are not present in practice and these are normally employed to determined the response functions. Experimental measurement of these values is therefore not possible. To account for this in the present invention, therefore, Monte Carlo modelling was used to evaluate the required response functions.

This modelling process required a model of the apparatus used in the method to be incorporated in software such as Monte Carlo Neutrons and Photons TM (available from Los Alamos National Laboratories). The model determines the response of the caesium iodide scintillator to incident gamma rays of determined, varying energies across the spectra of interest. The response function was determined using this model for the mean value of each 100 keV energy bin across a spectrum from 50 to 1450 keV in 100 keV steps.

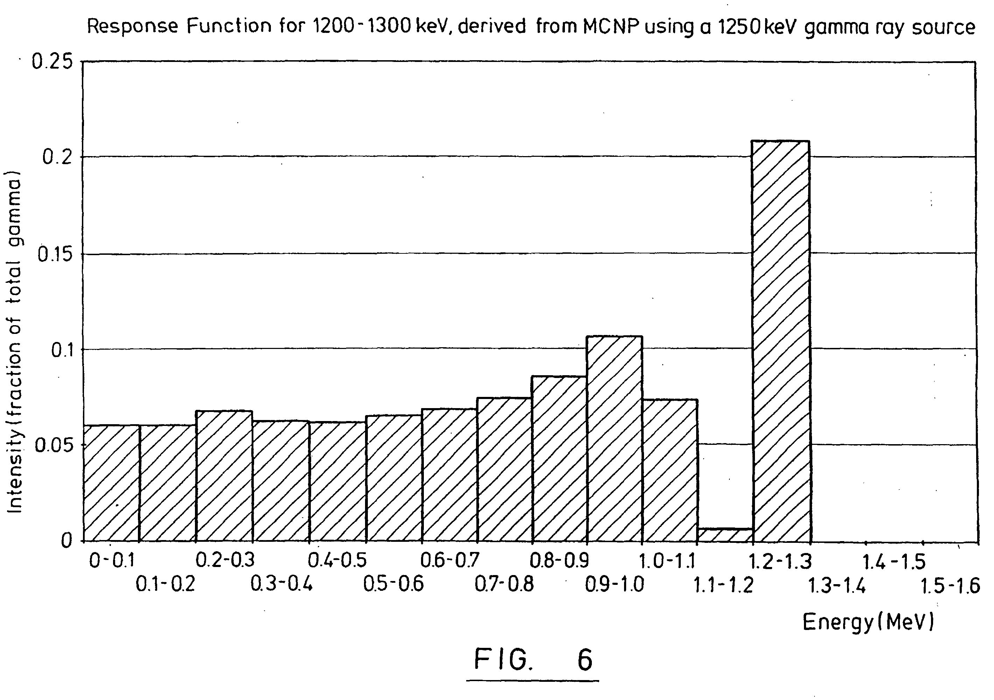

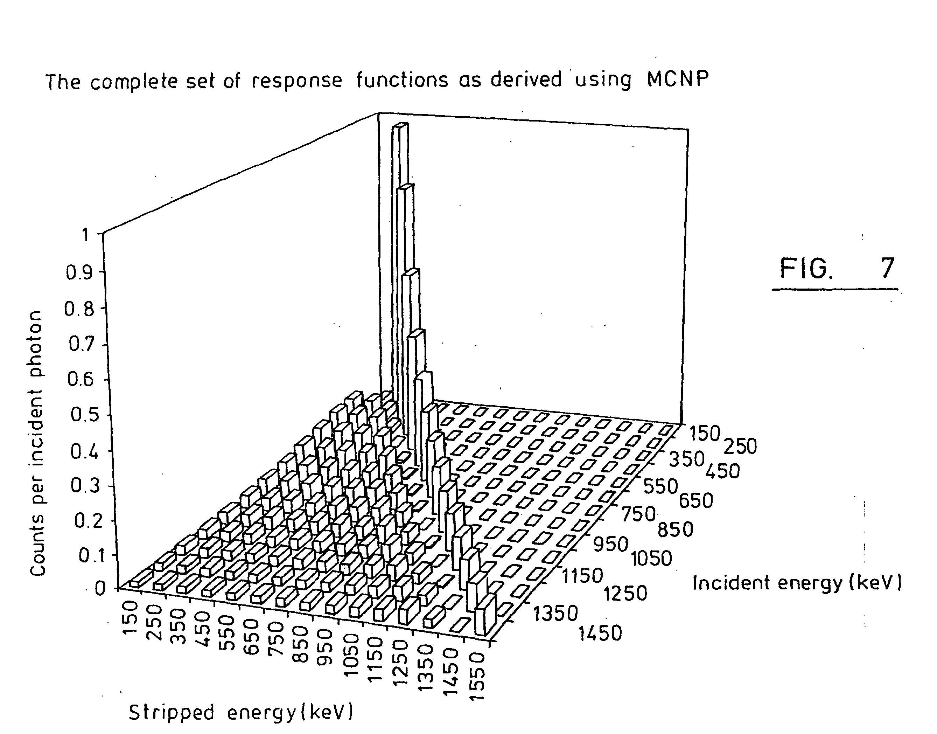

The modelling solution employed a parallel beam of incident gamma rays to approximate for a point source at a typical range. A set of response functions for 1200-1300keV using a 1250keV source is shown in Figure 6, with a complete set of response functions obtained in this manner provided in Figure 7. Based on the modelled response functions the experimentally measured spectra can be converted into an accurate version of the emitted spectra.

The overall information resulting, from either process, therefore, provides data at any given measurement point as to the actual emitted spectra and the location of that spectra source, in space, within the environment, due to the range value and the tilt and pan values from the instrument head assembly.

This information can form the input data to a processing system designed to arrive at the dose or dose rate results.

Within the environment the range, tilt and pan data is converted to x, y, z coordinates representative of the location and to which the data relating to the various bands forming the spectra are allocated. Each point can be considered as a separate source whose emitted spectra is known, although it is possible to consider each set of measurements as an area with the emitted spectra of desire.

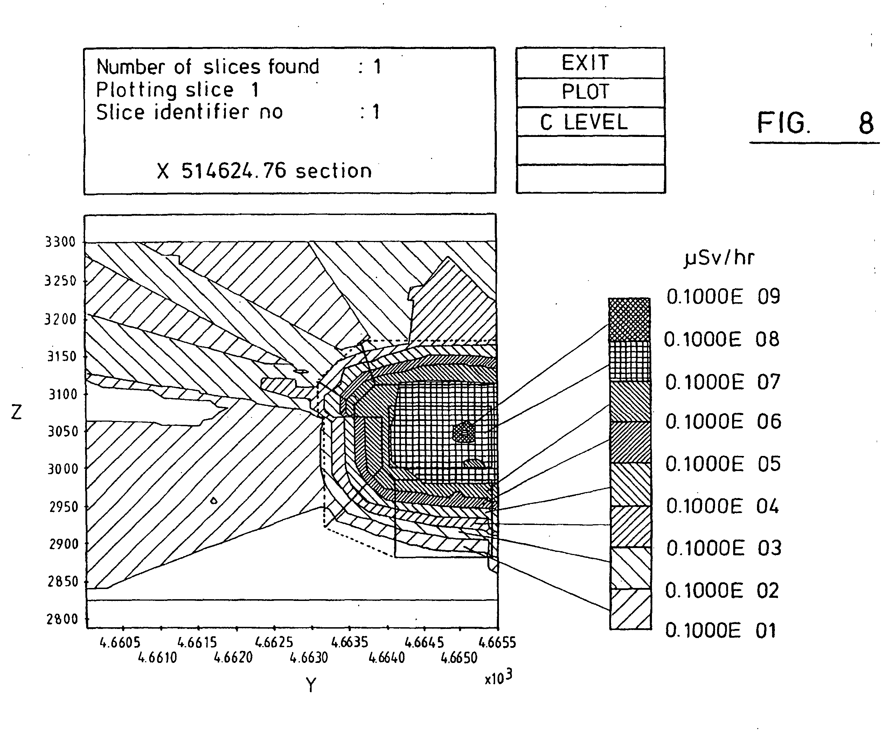

The dose or dose rate information can be determined by a variety of modelling techniques. A modelling software package such as DECOM the use of which is available from British Nuclear Fuels plc can be used, for instance. The model provides a representation of the surface shapes within the modelled environment and also takes into account the shielding, scattering and other effects arising from their presence. A typical result obtained using DECOM is illustrated in Figure 8. The result is a 2D slice through the environment indicating dose for the various locations in that plane based on the environment under consideration.

The input data supplied to DECOM above can alternatively be used in Monte Carlo Neutrons and Photons to produce dose rate from the various source distributions. A similar input file providing locations and strengths of sources and a description of the environment in which they are located enables MCNP to calculate, on a photon by photon basis, the progress of photons through the model from birth to death. Once a sufficiently large number of photons have been modelled for the environment the user can select certain volumes within the modelling environment on which dose rates can be calculated.

Such a dose mapping technique is, however, not the most suitable for environments involving heavy shielding. Unfortunately the dose rate behind such shielding requires a very large number of photons to be modelled, the vast majority of which will never pass through the shielding and contribute to the dose at the area of interest. The computing time necessary to evaluate the passage of these non contributing photons is, however, still required.

A third alternative dose mapping technique is offered by use of a commercially available spread sheet package, such as EXCEL from Microsoft or even specifically written code. By assuming that the measure sources are each point sources then the locations of those sources can readily be presented in a spread sheet. The use of flux to dose conversion factors can then be employed to determine the dose rate at any point; the dose at any point being the sum of the doses from each source within the environment.

Such techniques are, however, less versatile and weaker as no estimation can readily be made for scattering or absorption within the environment. Distance is taken as the predominant factor in determining dose rate.

The evaluation of the technique, through theoretical data and actual experimental verification is now illustrated.

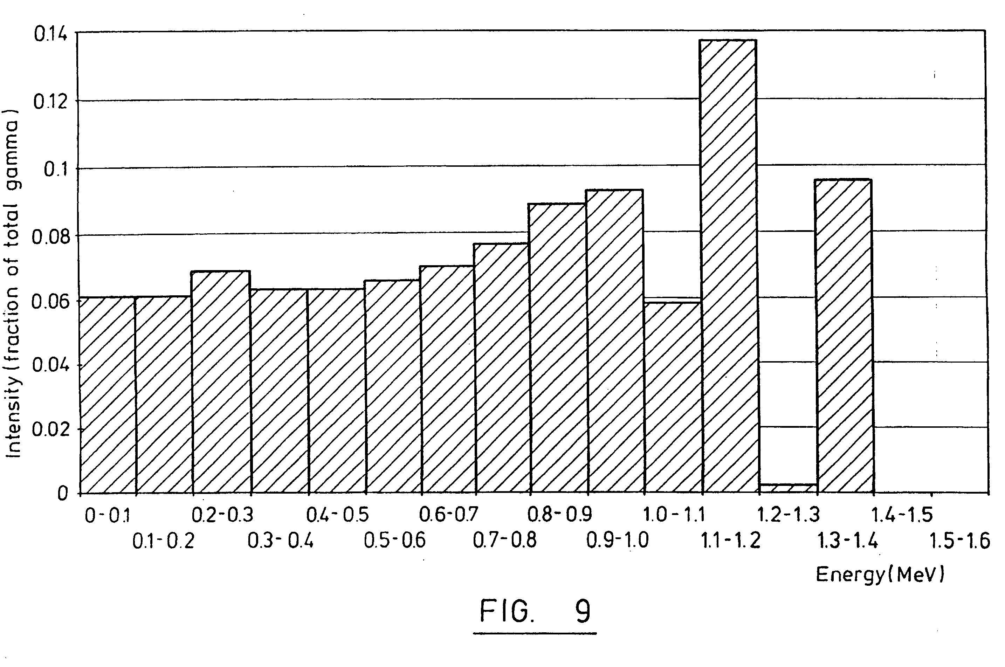

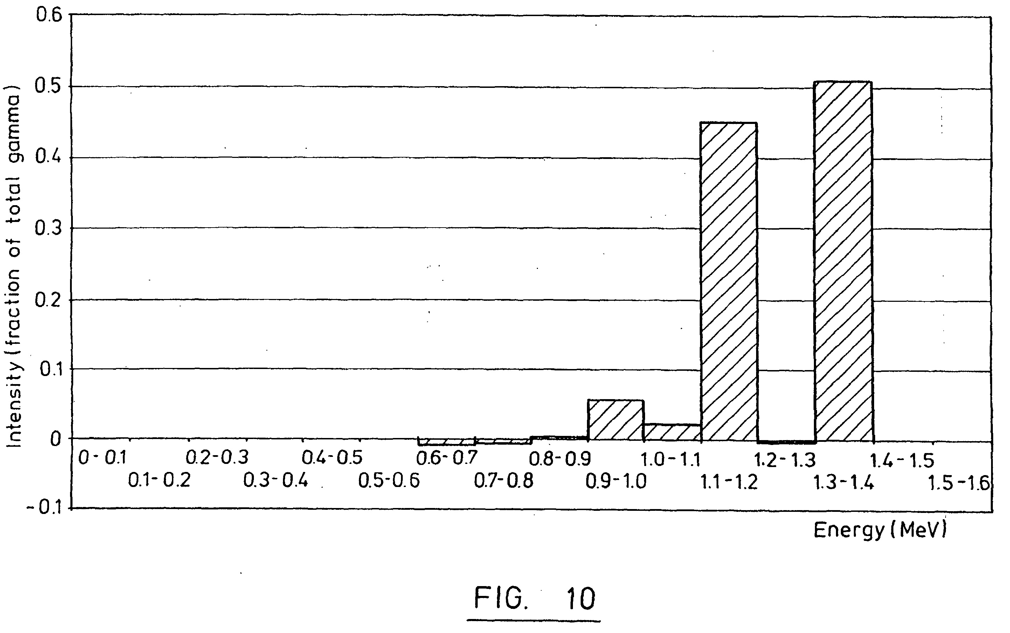

Monte Carlo Neutrons and Photons was used to provide simulate real input results from a detector to give data for consideration. The model provided input data based around an incident spectrum consisting of 50% each of 1173 and 1332 keV gamma radiation, typical of cobalt 60. The simulation produced a spectra for a variety of gamma rays extending beyond those specific energies to simulate scattering and other effects present in real systems. The spectra was then binned in the manner discussed above, and is illustrated in Figure 9. This spectrum was then stripped, using the response functions previously calculated, on an EXCEL spread sheet. The incorporated stripping algorithms produced the emitted spectra which is illustrated in Figure 10.

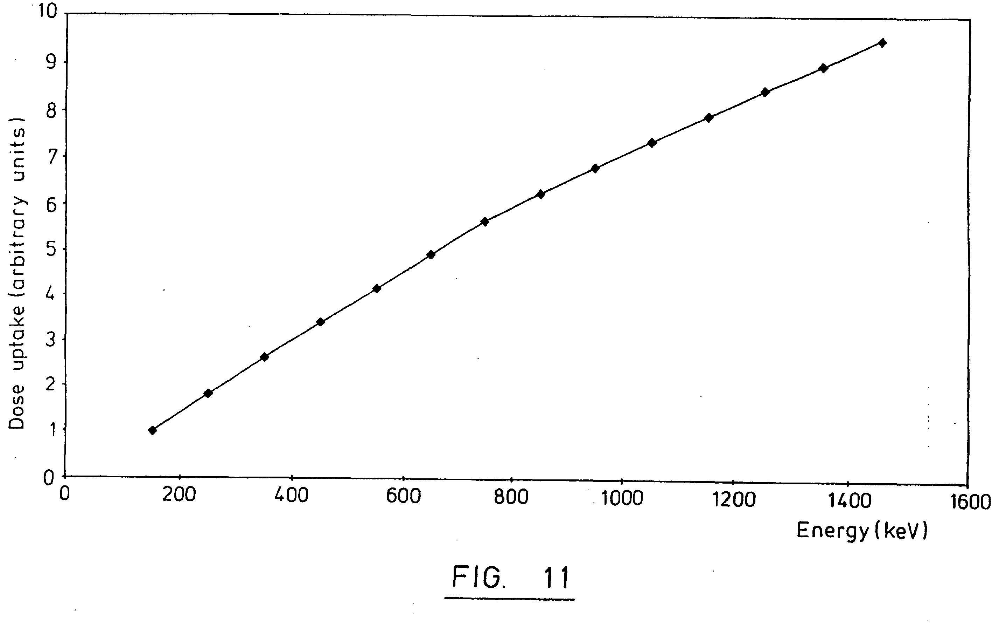

The effect of a gamma ray of a given energy on dose varies significantly with energy. Figure 11 illustrates the variation of dose uptake across the relevant gamma ray energy spectra. Using the data from this table and the calculated emitted spectra of Figure 10 an end result can be obtained for that source. With the total dose from that source calculated as a summation of the partial doses arising from each of the energy bins in the full spectra.

The determined dose from the created experimental scenario was calculated to be 8.35 units compared with the true dose rate, which could be calculated as the incident spectrum was known, of 8.33 units. A high degree of accuracy to within 1% is thus established.

In a similar manner modelled measured spectra arising from Cs-137 and Cs-134 were also determined, together with an analysis based on a mixed Cs-137 and Co-60 contribution in a 10 to 1 ratio. The stripped dose values/true dose values for these determinations are as follows.

| Isotope | Stripped Over True Dose |
|---|---|
| Co-60 | 1.002 |
| Cs-137 | 0.992 |
| Cs-134 | 1.068 |
| Cs137:Co60 (10:1 ratio) | 1.001 |

The lower level of accuracy with the Cs-134 measurements arise from the greater deviation between the actual emitted energies (605 and 796 keV) and the mean energies on which the modelled response functions were calculated (650 and 750 keV) than for the other isotopes considered. The selection of bin ranges to present mean values close to the emitted spectra values for the anticipated source types could be envisaged to minimise such errors.

The actual accuracy of the technique can be demonstrated still further if the finite energy resolution of the scintillator used to detect the incident gamma rays is taken into account in generating the modelling input data. The modelling technique used to arrive at radiometric data of the gamma ray interactions is a delta function. However, spectra actually collected experimentally have peaks which are broadened by statistical effects in light collection. In a similar vein the modelled Compton edges used in the calculations are not broadened as they are in practice.

The effect of peak broadening which occurs in practice can be introduced into the modelling data generated by MCNP by convoluting a normalised gaussian distribution with the model data. The gaussian function employed is given by

$$P(E) = A \exp - \frac{(E-E_0)^2}{2\sigma^2}$$

where $P(E)$ is the value of the gaussian at energy E;

A being a normalised constant;

$E^0$ the peak energy; and

$\sigma$ is 1 / 2.35 times the full width of the half maximum which was determined to empirically vary as $(4.6E_0)^{1/2}$.

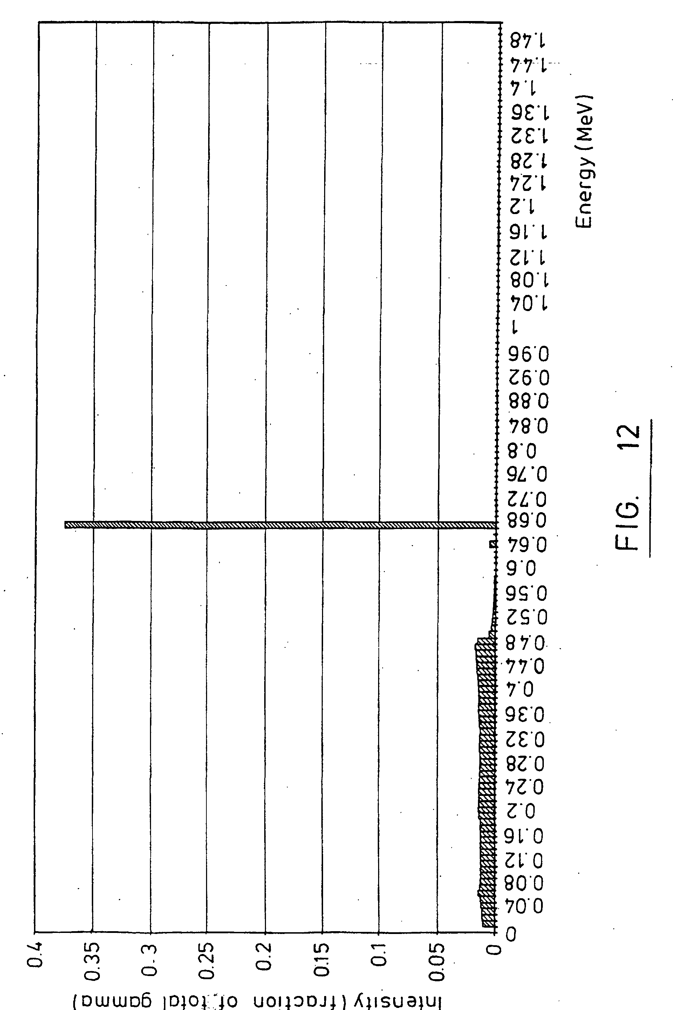

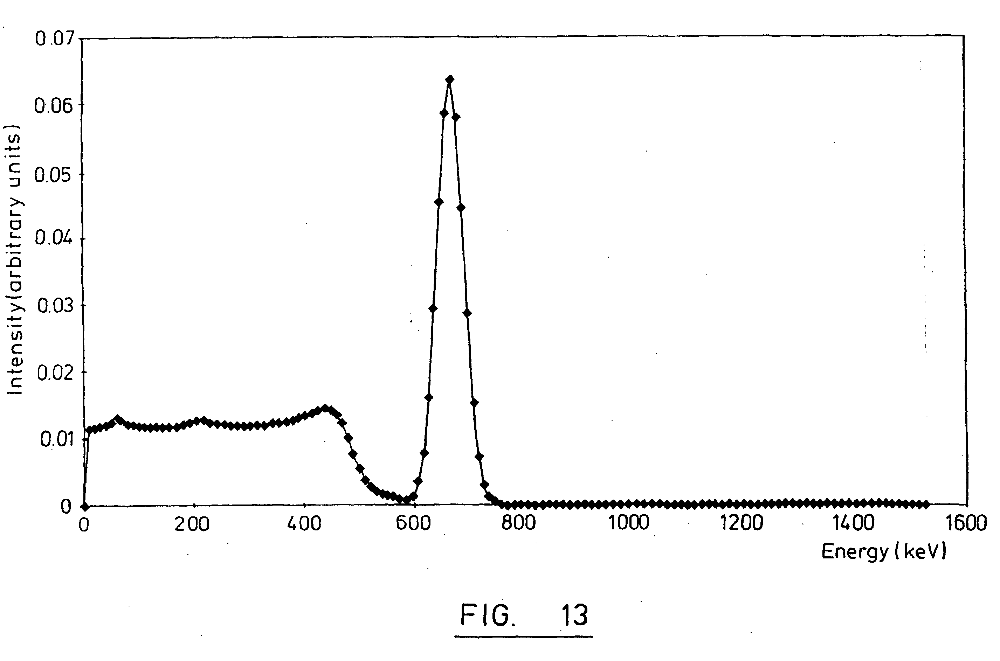

The convolution of the gaussian with the data produced by MCNP is possible using the worksheet and an unbroadened spectrum produced from the MCNP model, illustrated in Figure 12 for Cs-137 converts to Figure 13 when the gaussian shape is convoluted with it.

The effect of peak broadening is to move some of the events from the bin they should lie in to a neighbouring bin. Thus for Cs-137 not all photo peak events lie in the 600-700 keV energy bin. Those events moved up and those events moved down in energy as a result of the peak broadening to an extent offset one another. This in combination with the linear nature of the energy against dose shown in Figure 11 maintains the accuracy of the dose calculation.

Where convolution to give the peak broadening effect is incorporated spectrum stripping can still be carried out using the same unbroadened response functions determined previously.

A similar effect occurs with the Compton events which also undergo peak broadening. Once again events relocated to a higher bin are back cancelled to a large extent by those relocated to lower bins.

Analysis of the accuracy of dose calculation for the model solutions with and without peak broadening effects being taken into account produces the following results.

| Isotope | With Broadening | Without Broadening |
|---|---|---|
| Co-60 | 1.007 | 1.002 |

(continued)

| Isotope | With Broadening | Without Broadening |
|---|---|---|
| Cs-137 | 1.021 | 0.992 |
| Cs-134 | 1.019 | 1.068 |
| Cs137:Co60(10: ratio) | 1.007 | 1.001 |

The accounting for peak broadening significantly improves the accuracy where the emitted gamma ray peaks are close to the borders of energy bins, for instance Cs-134.

As previously stated the lack of mono-energetic sources in real world environments precludes the experimental determination of response functions for the energy bins. As a consequence it is necessary to rely on response functions obtained from modelled data, but clearly their use must be justified to ensure accuracy. The justification is determined by assessing the ability of the MCNP model to accurately model the detection system used in practice.

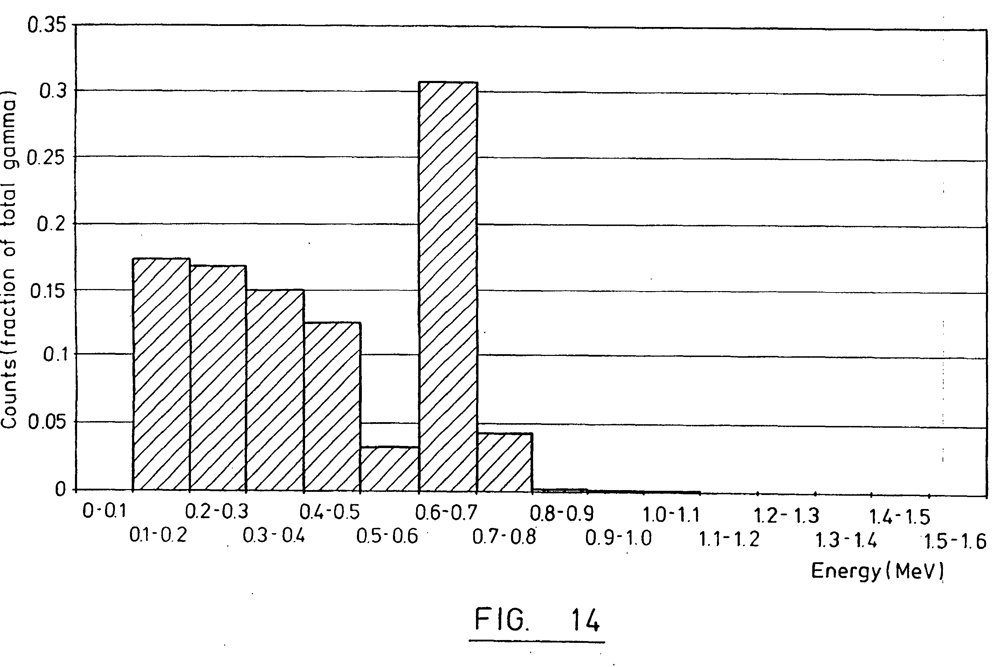

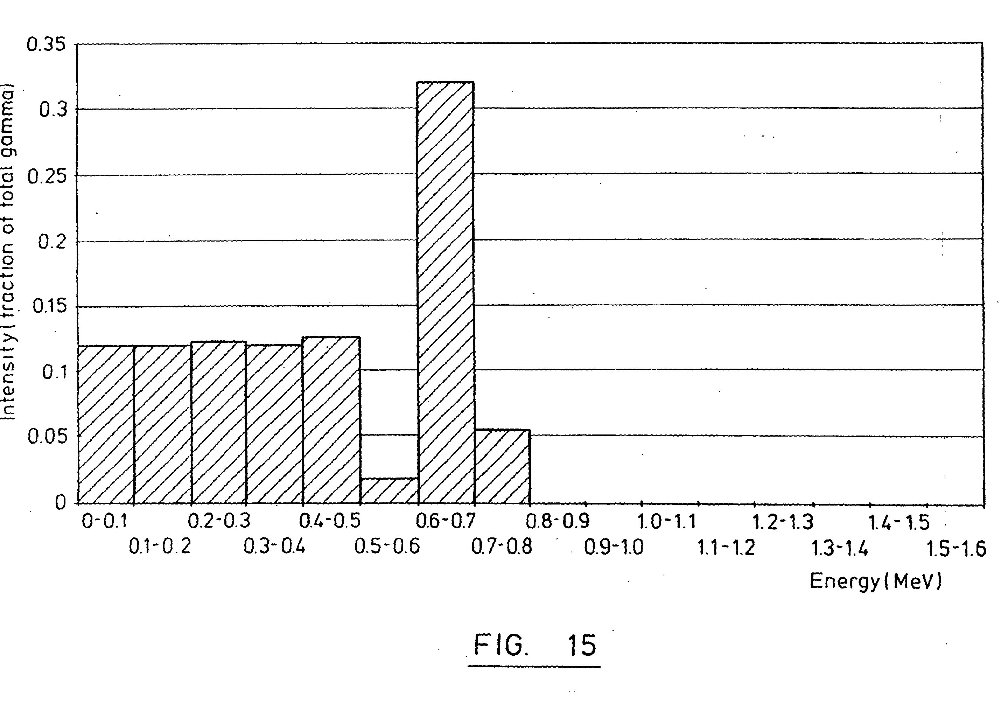

To make this comparison the spectrum from a Cs-137 source was monitored using the detection instrument in a real-world experiment. The count rate and energy results determined by the instrument were then binned into 100 keV energy bins, which results are presented as Figure 14. This spectra is an experimentally determined equivalent to the model determined spectra of Figure 15.

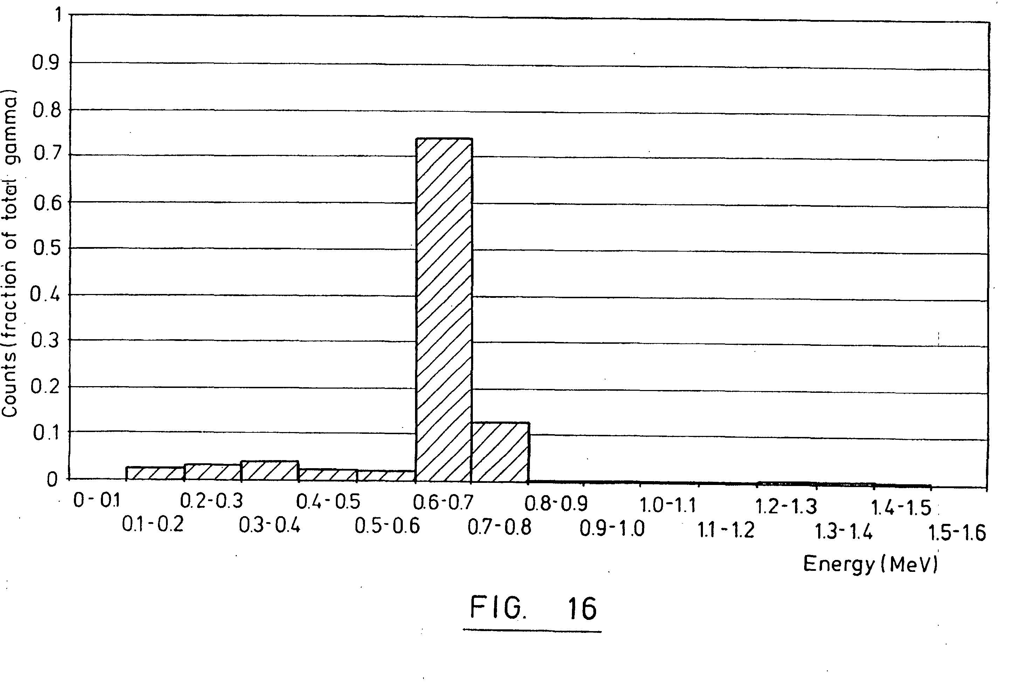

The spectra illustrated in Figure 14 obtained experimentally was then unpeeled using the stripping technique described previously to produce the emitted spectra shown in Figure 16. The unpeeling worked to a significant degree, placing 87% of the count measured in the 600-700 and 700-800 keV bins. The source in question produced 662keV photons in practice, which as a result of the gaussian peak broadening previously discussed, expanded into the neighbouring energy bin also.

A calculated dose based on these results yielded a dose which is 96% of that obtained if all the counts were placed at 662 keV.

In any event it is unreasonable to assume that all of the gamma rays emitted by even a commercially prepared Cs-137 reference source are of 662.6 keV and that the deviation arose as inaccuracies in the technique. Such a source is inevitably not pure, other components besides caesium being present and is additionally sealed in a steel can. The steel and impurities can each give rise to scattering of the 662 keV radiation emitted by Cs-137 giving spread below the 662.6keV point even for a true emitted spectra.

To evaluate the extent of this likely spread MCNP was used to model the likely spectra from the Cs-137 source obtained from Amersham International (reference code X7 CS-137) and used above. The source in question is 3mm long and 3mm in diameter encapsulated essentially in steel of overall size 6mm long and 4.5mm in diameter. The calculated emitted spectra using the MCNP indicates that only 93% of all photons that penetrate the encapsulation of the model source escape with their full energy. The remainder are scattered below this 662.6 keV value.

Based on this revised actual emitted spectrum source compared with the experimentally determined values, an agreement to greater than 1% accuracy between the two is obtained.

The results according to the technique of the present invention were compared with a standard health physicians dose probe in the following manner. The Cs-137 (7.8mCi; dose rate at 2m, 7.5 micro Sv/hr), Cs-134 (0.87mCi; dose rate at 2m, 2.0 micro Sv/hr) and Co-60 (2.6mCi; dose rate at 2m, 10 micro Sv/hr) sources were placed 2m from the detector in all possible combinations of the three sources. The traditional instrument was used to make dose measurements at the detector for the instrument of the present invention.

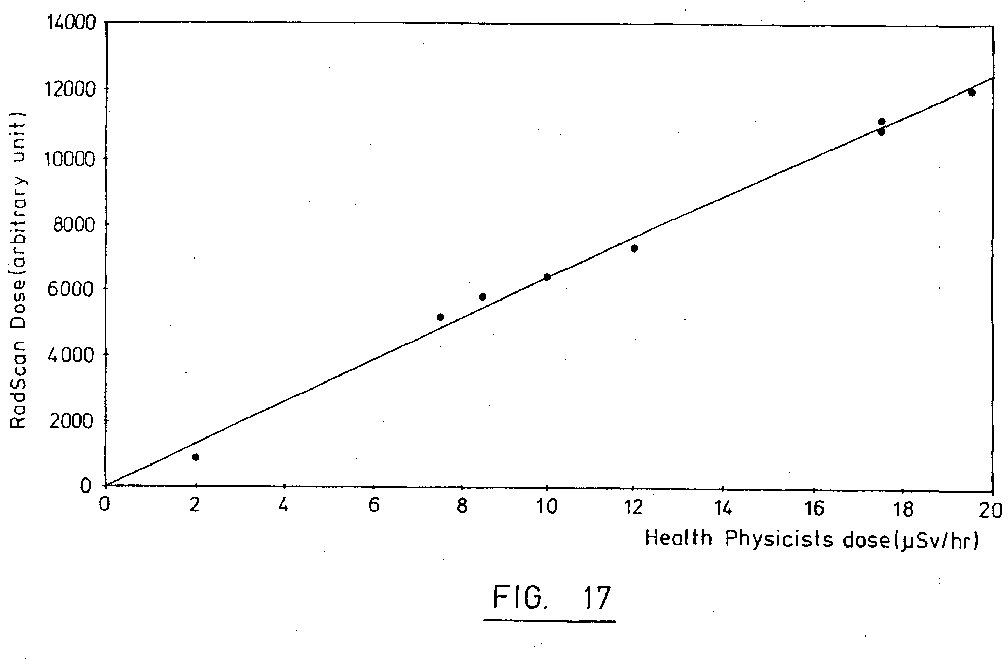

Spectra were collected for 200 seconds in each of the scenarios relating to various ranges of dose rates and gamma fields. These results were analysed to produce a value proportional to the dose rate according to the present invention. The results from the present invention are compared with those of the prior art dose meter in Figure 17 and good linearity is seen to exist.

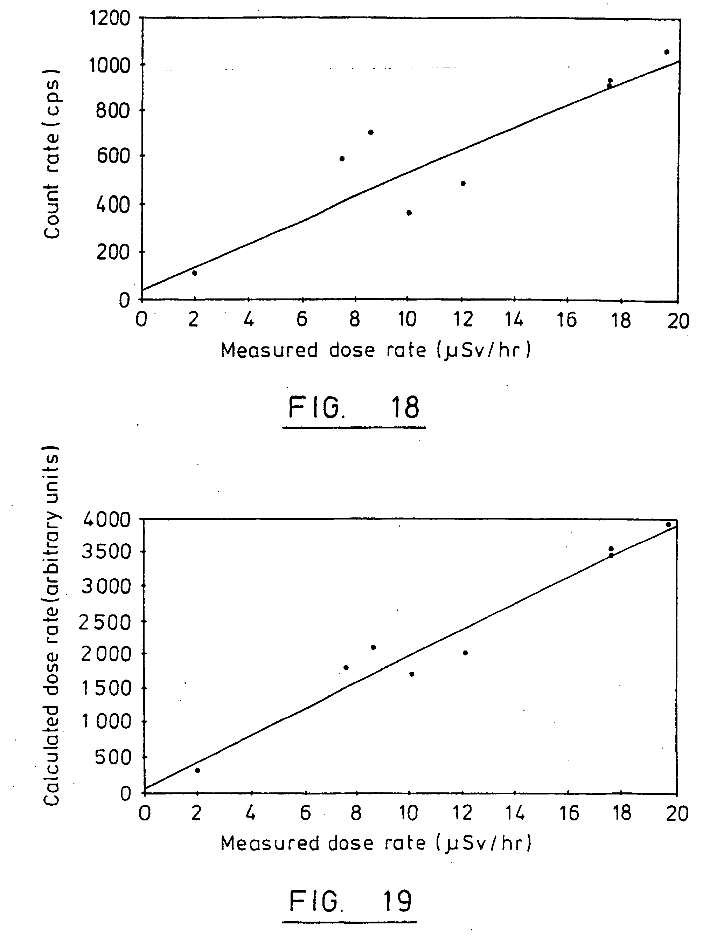

Such linearity did not occur with the total count rate observed by the instrument against dose rate or with the dose rate calculated from an unstripped bin spectrum against the measured dose rate, see Figures 18 and 19.

The above tests were also reproduced for the Co-60 source and a Co-60 and Cs-137 source in combination for a collection time of 10 seconds to reflect the speed at which measurements are required in practice. These results are indicated below and show good correspondence between the two indicating that accurate measurements can be taken in short time scales.

| Source | Dose Rate 10 seconds | Dose Rate 200 seconds | Difference % |
|---|---|---|---|
| Co-60 | 6430 | 6320 | +1.7 |

(continued)

| Source | Dose Rate 10 seconds | Dose Rate 200 seconds | Difference % |
|---|---|---|---|
| Co60 & Cs137 | 10570 | 10830 | -2.4 |

The method and apparatus provided by the present invention therefore allow dose rates to be determined in mixed gamma fields on a practicable time scale with great accuracy for any location required, based on detection from a remote point.

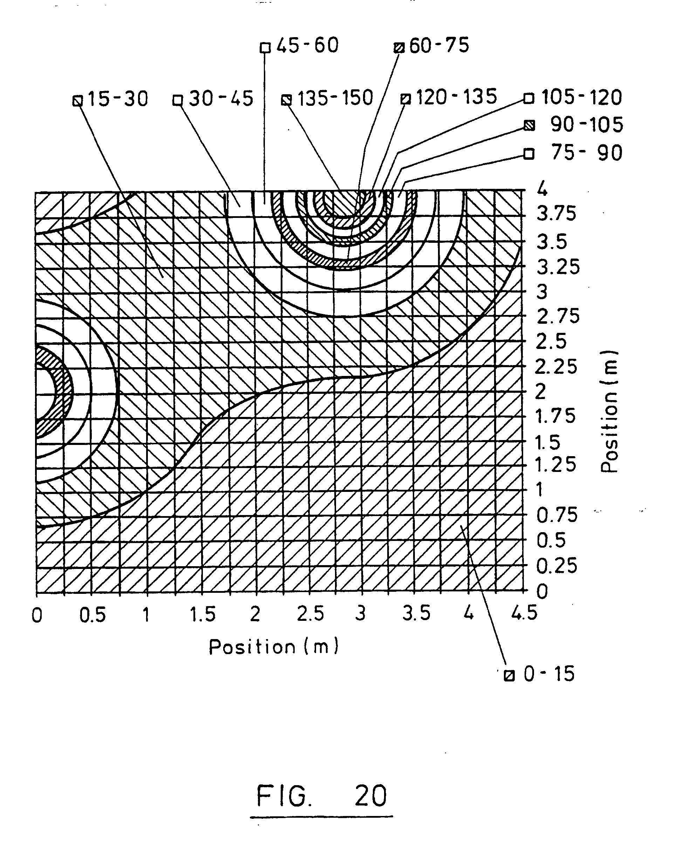

A further example of the successful use of the present invention is illustrated in Figure 20 and the table below.

An instrument according to the invention was used to produce a dose map of a laboratory with two sealed sources provided in it. The environment contained a 10mCi and a 7.8mCi Cs-137 source and was scanned automatically using the instrument. The output file from the scan was used to produce a dose plot in the manner described above.

Figure 20 illustrates the dose rates calculated on a horizontal plane located 1 metre above ground level for the laboratory. The two sources were located at 1.5 metres above ground, the 10mCi source at coordinates 2.75, 4 metres and the 7.8mCi source at 0, 2.0 metres. The locations of these sources can readily be identified on Figure 20 by reference to the areas of highest dose rate.

To check the instruments performance a conventional dose probe was also used to measure the same environment and sources. The results for the comparison, at a plane height of 1 metre, are presented in Table 1.

TABLE 1

| Location | Instrument measured dose | Probe measured dose |
|---|---|---|
| 0.5,2m | 43.0 $\mu$Sv/hr | 44.1 $\mu$Sv/hr |
| 0.5,1m | 19.6 $\mu$Sv/hr | 19.1 $\mu$Sv/hr |
| 1.5,2m | 16.9 $\mu$Sv/hr | 16.6 $\mu$Sv/hr |
| 1.5,1m | 12.2 $\mu$Sv/hr | 10.9 $\mu$Sv/hr |
| 1.5,0m | 7.6 $\mu$Sv/hr | 6.3 $\mu$Sv/hr |
| 2.5,3m | 33.5 $\mu$Sv/hr | 37.5 $\mu$Sv/hr |

As can be seen the instrument provides an efficient and accurate measurement of dose rates in the environment and is applicable to a greater range of environments than the conventional dose prove can be introduced into.

**Claims**

1. A method for determining dose or dose rate for one or more selected locations within an environment, comprising the steps of:-

   a) measuring incident gamma ray energy and count rate from one or more sources, for one or more viewed portions of the environment, at one or more measured locations within the environment to obtain a measured spectrum for those measured locations;
   b) measuring the spatial position of the measured locations;
   c) determining an emitted spectrum for each viewed portion of the environment from the measured spectrum for each viewed portion of the environment;
   d) inputting the emitted spectrum and measured location information to data processing means; and
   e) determining the dose rate at one or more selected locations from the calculated total gamma ray energy incident on those one or more selected locations arising from the emitted spectrum of the one or more sources.

2.  A method according to claim 1 in which the measured spectra is divided into a series of energy ranges and the count rates falling within a range are summed to give a total count for that range.

3.  A method according to claim 2 in which the ranged or binned measured spectra is analysed to determine the contributing energies by the use of spectrum stripping.

4.  A method according to claim 3 in which the analysis is performed on the highest energy level bin first.

5.  A method according to claims 3 or 4 in which an energy bin is analysed by subtracting from the spectrum a value based on a response function multiplied by a variable factor to reduce the bin under analysis to zero.

6.  A method according to claim 5 in which the highest remaining energy bin still contributing to the spectra after subtraction is analysed next, the process being repeated to reduce the complete spectra to zero.

7.  A method according to claims 5 or 6 in which the response function used in the analysis is a function of the energy value under consideration, the response functions are predetermined for the method.

8.  A method according to any of claims 5 to 7 in which the variable factor is adjusted to equate its multiple with the response factor to the bin under analysis.

9.  A method according to any of claims 2 to 8 in which the analysis of the binned spectra may comprise an iterative process, with the fit at one set of variable factors being compared with the fit at a different set of variable factors.

10. A method according to claim 9 in which the comparison is based on a goodness of fit test, such as a chi-squared test., the comparisons being continued with variations in the variable factor values until the difference between generated and measured spectrum is minimised or reduced below a given threshold.

11. A method according to any of claims 2 to 10 in which the analysis results in one or more emission energy values and an intensity value for each emission energy value, the analysis results being considered as the emitted spectra.

12. A method according to any of claims 1 to 11 in which the source locations and intensities or spectra are inputted to a computer model of the environment under analysis.

13. A method according to any of claims 1 to 12 in which the method uses processing means or model to determine dose and/or dose rates based on calculation of the behaviour/effect of a large number of photons from each source according to its characteristics.

14. A method according to any of claims 1 to 12 in which the method uses the processing means or model to provide visualisation of the environment and/or the source locations and/or the source types and/or diagnostic information on the source.

15. A method according to any of claims 1 to 14 in which the method uses the processing means or model to account for the shape and/or relative position and/or shielding effect and/or attenuating effect and/or dissipating effect and/or first order scattering effect and/or second order scattering effect of the components of the environment.

16. A method according to any of claims 1 to 15 in which the dose rate at a location is determined by summing the contribution of all the source locations emitted spectra determined to that point.

17. A method according to any of claims 1 to 16 in which the dose rate calculated for a plurality of locations within the environment is used to generate contour or other plots of dose rate over a part or the whole of the environment.

18. A method according to any of claims 1 to 17 in which preferably the gamma detector analyses a location within the environment and then analyses further locations within the environment with more locations being sampled at or towards the equator of the detector scan than at or towards the poles of the detector scan.

19. A method according to claim 18 in which a tilt and pan movement is provided for the detector and collimator, and the number of analysed locations in the pan direction at varying tilt angles is proportional to the cosine of the tilt angle and / or the number of analysed locations in the pan direction, at a given tilt angle, varies from a maximum at the equator to one or zero locations at the pole or poles.

20. A method according to any of claims 1 to 19 in which the location position is determined in three dimensions, the location being determined by the tilt and pan position of the gamma detector and in terms of the location's distance from the gamma detector.

21. A dose or dose rate determining apparatus for one or more selected locations within an environment, the apparatus comprising:

a) means for measuring incident gamma ray energy and count rate from one or more sources, for one or more viewed portions of the environment, at one or more measured locations within the environment, the apparatus obtaining a measured spectrum for the measured locations from this information;
b) means for measuring the spatial position of the measured locations;
c) calculating means for determining an emitted spectrum for each viewed portion of the environment from the measured spectrum for each viewed portion of the environment;
d) processing means adapted to receive inputs corresponding to the emitted spectrum and measured location information; and
e) calculating means for determining the dose rate at one or more selected locations from the total calculated gamma ray energy incident on those selected location arising from the emitted spectrum of the one or more sources.

**Patentansprüche**

1. Verfahren zur Bestimmung der Dosis oder Dosisrate für einen oder mehrere ausgewählte Standorte in einer Umgebung, welches folgende Schritte umfaßt:

a) Messen der Energie und der Zählrate von aus einer oder mehreren Quellen einfallender Gammastrahlung für einen oder mehrere betrachtete Abschnitte der Umgebung an einem oder mehreren vermessenen Standorten in der Umgebung, um ein Meßspektrum für diese vermessenen Standorte zu erhalten;

b) Vermessen der räumlichen Lage der vermessenen Standorte;

c) Bestimmen eines Emissionsspektrums für jeden betrachteten Abschnitt der Umgebung anhand des Meßspektrums für jeden betrachteten Abschnitt der Umgebung;

d) Eingeben des Emissionsspektrums und der Informationen über den vermessenen Standort in Mittel zur Datenverarbeitung;
und

e) Bestimmen der Dosisrate an einem oder mehreren ausgewählten Standorten anhand der berechneten, aus dem Emissionsspektrum der aus der einen oder den mehreren Quellen hervorgehenden Gesamtenergie der auf diesen einen oder diese mehreren Standorte einfallenden Gammastrahlung.

2. Verfahren nach Anspruch 1, bei dem das Meßspektrum in eine Reihe von Energiebereichen unterteilt wird und die Zählraten, welche in einen Bereich fallen, zu einer Gesamtzählung für diesen Bereich zusammengezählt werden.

3. Verfahren nach Anspruch 2, bei dem das Bereichsoder gebinnte Meßspektrum analysiert wird, um die beitragenden Energien unter Anwendung von Spektrum-Strippen zu ermitteln.

4. Verfahren nach Anspruch 3, bei dem die Analyse zuerst an dem Bin des höchsten Energieniveaus durchgeführt wird.

5. Verfahren nach Anspruch 3 oder 4, bei dem ein Energie-Bin analysiert wird, indem von dem Spektrum ein Wert substrahiert wird, welcher auf einer mit einem variablen Faktor multiplizierten Ansprechfunktion basiert, um das Bin bei der Analyse auf Null zu reduzieren.

6. Verfahren nach Anspruch 5, bei dem das höchste verbleibende Energie-Bin, welches nach der Subtraktion noch zum Spektrum beiträgt, als nächstes analysiert wird, wobei der Vorgang wiederholt wird, um das gesamte Spektrum auf Null zu reduzieren.

7. Verfahren nach Anspruch 5 oder 6, bei dem die Ansprechfunktion, welche bei der Analyse verwendet wird, eine Funktion des betreffenden Energiewertes ist, wobei die Ansprechfunktionen für das Verfahren vorgegeben sind.

8. Verfahren nach einem der Ansprüche 5 bis 7, bei dem der variable Faktor bei der Analyse derart eingestellt wird, daß sein Vielfaches mit dem Ansprechfaktor dem Bin gleichgesetzt ist.

9. Verfahren nach einem der Ansprüche 2 bis 8, bei dem die Analyse des gebinnten Spektrums ein iteratives Verfahren umfassen kann, wobei die Anpassung an einen Satz variabler Faktoren mit der Anpassung an einen anderen Satz variabler Faktoren verglichen wird.

10. verfahren nach Anspruch 9, bei dem der Vergleich auf einem Test für die Güte der Anpassung, wie einen Chi-Quadrat-Test, beruht, wobei die Vergleiche so lange mit Veränderungen der Werte des variablen Faktors fortgesetzt werden, bis der Unterschied zwischen dem erzeugten und dem gemessenen Spektrum minimiert oder auf unterhalb eines vorgegebenen Schwellenwertes reduziert ist.

11. Verfahren nach einem der Ansprüche 2 bis 10, bei dem die Analyse als Ergebnis zu einem oder mehreren Emissionsenergiewerten und einem Intensitätswert für jeden Emissionsenergiewert führt, wobei die Analyseergebnisse als das Emissionsspektrum betrachtet werden.

12. Verfahren nach einem der Ansprüche 1 bis 11, bei dem die Standorte der Quellen und die Intensitäten oder Spektren in ein Computermodell der analysierten Umgebung eingegeben werden.

13. Verfahren nach einem der Ansprüche 1 bis 12, bei dem das Verfahren ein Verarbeitungsmittel oder -modell verwendet, um die Dosis und/oder Dosisraten zu ermitteln, welche auf Berechnungen des Verhaltens/der Wirkung einer großen Anzahl Photonen von jeder Quelle gemäß deren Charakteristik basieren.

14. Verfahren nach einem der Ansprüche 1 bis 12, bei dem das Verfahren das Verarbeitungsmittel oder -modell verwendet, um eine visualisierung der Umgebung und/oder der Quellen-Standorte und/oder Quellen-Typen und/oder einer diagnostischen Information über die Quelle bereitzustellen.

15. Verfahren nach einem der Ansprüche 1 bis 14, bei dem das Verfahren das Verarbeitungsmittel oder -modell verwendet, um die Form und/oder relative Lage und/oder einen Abschirmeffekt und/oder Abschwächungseffekt und/oder Dissipationseffekt und/oder Streueffekt erster Ordnung und/oder Streueffekt zweiter Ordnung der Komponenten der Umgebung zu erklären.

16. Verfahren nach einem der Ansprüche 1 bis 15, bei dem die Dosisrate an einem Standort bestimmt wird, indem der Beitrag aller Emissionsspektren der Quellen-Standorte, die bis dahin ermittelt wurden, zusammengezählt wird.

17. Verfahren nach einem der Ansprüche 1 bis 16, bei dem die Dosisrate, welche für eine Vielzahl von Standorten in der Umgebung berechnet wurde, verwendet wird, um Höhenlinienplots oder andere Diagramme der Dosisrate über einen Teil der oder über die gesamte Umgebung zu erzeugen.

18. Verfahren nach einem der Ansprüche 1 bis 17, bei dem der Gamma-Detektor vorzugsweise einen Standort in der Umgebung analysiert und danach weitere Standorte in der Umgebung analysiert, wobei mehr Standorte am oder in Richtung auf den Äquator des Detektor-Scans als an den oder in Richtung auf die Pole(n) des Detektor-Scans abgetastet werden.

19. Verfahren nach Anspruch 18, bei dem eine Kipp- und Schwenkbewegung für den Detektor und den Kollimator vorgesehen ist und die Anzahl der analysierten Standorte in der Schwenkrichtung bei verschiedenen Kippwinkeln proportional zum Cosinus des Kippwinkels ist und/oder die Anzahl der analysierten Standorte in der Schwenkrichtung bei einem vorgegebenen Kippwinkel zwischen einem Maximum am Äquator und einem oder keinem Standort an dem Pol oder den Polen variiert.

**20.** Verfahren nach einem der Ansprüche 1 bis 19, bei dem die Lage des Standortes in drei Dimensionen bestimmt wird, wobei die Lage durch die Kipp- und SchwenkStellung des Gamma-Detektors und hinsichtlich der Entfernung des Standortes von dem Gamma-Detektor bestimmt wird.

**21.** Vorrichtung zur Bestimmung der Dosis oder Dosisrate für einen oder mehrere ausgewählte Standorte in einer Umgebung, wobei die Vorrichtung umfaßt:

a) Mittel zur Messung der Energie und der Zählrate von aus einer oder mehreren Quellen einfallender Gammastrahlung für einen oder mehrere betrachtete Abschnitte der Umgebung an einem oder mehreren vermessenen Standorten in der Umgebung, wobei die Vorrichtung anhand dieser Information ein Meßspektrum für die vermessenen Standorte erhält;

b) Mittel zur Messung der räumlichen Lage der vermessenen Standorte;

c) Berechnungsmittel zur Bestimmung eines Emissionsspektrums für jeden betrachteten Abschnitt der Umgebung anhand des Meßspektrums für jeden betrachteten Abschnitt der Umgebung;

d) Verarbeitungsmittel, welche dem Empfang von Eingaben angepaßt sind, welche dem Emissionsspektrum und der Information über den vermessenen Standort entsprechen; und

e) Berechnungsmittel zur Bestimmung der Dosisrate an einem oder mehreren ausgewählten Standorten anhand der berechneten, aus dem Emissionsspektrum der aus der einen oder den mehreren Quellen hervorgehenden Gesamtenergie der auf diesen einen oder diese mehreren Standorte einfallenden Gammastrahlung.

**Revendications**

**1.** Procédé de détermination d'une dose ou d'un débit de dose à un ou plusieurs emplacements sélectionnés au sein d'un environnement, comprenant les étapes consistant à :

a) mesurer l'énergie et le taux de comptage d'un rayon gamma incident provenant d'une ou plusieurs sources, pour une ou plusieurs parties visualisées de l'environnement, à un ou plusieurs emplacements mesurés au sein de l'environnement, afin d'obtenir un spectre mesuré pour ces emplacements mesurés ;
b) mesurer la position spatiale des emplacements mesurés ;
c) déterminer un spectre émis pour chaque partie visualisée de l'environnement, à partir du spectre mesuré pour chaque partie visualisée de l'environnement ;
d) transmettre les informations relatives au spectre émis et à l'emplacement mesuré à des moyens de traitement de données ; et
e) déterminer le débit de dose à un ou plusieurs emplacement(s) sélectionné(s) à partir de l'énergie calculée totale du rayon gamma incident audit ou auxdits emplacement(s) sélectionné(s) et provenant du spectre émis par une ou plusieurs source(s).

**2.** Procédé selon la revendication 1, dans lequel le spectre mesuré est divisé en une série de domaines d'énergie, et dans lequel les taux de comptage se trouvant dans un domaine sont additionnés afin de fournir un comptage total pour ce domaine.

**3.** Procédé selon la revendication 2, dans lequel le spectre mesuré classé ou collecté est analysé afin de déterminer les énergies contributrices à l'aide d'une décomposition des spectres.

**4.** Procédé selon la revendication 3, dans lequel l'analyse est effectuée tout d'abord sur le niveau d'énergie le plus élevé.

**5.** Procédé selon la revendication 3 ou 4, dans lequel un niveau d'énergie est analysé en soustrayant du spectre une valeur basée sur une fonction de réponse multipliée par un facteur variable afin de réduire le niveau à zéro lors de l'analyse.

**6.** Procédé selon la revendication 5, dans lequel le niveau d'énergie le plus élevé restant et continuant à contribuer au spectre après la soustraction est analysé par la suite, le processus étant répété afin de réduire le spectre complet à zéro.

**7.** Procédé selon les revendications 5 ou 6, dans lequel la fonction de réponse utilisée lors de l'analyse dépend de la valeur d'énergie prise en considération, et dans lequel les fonctions de réponse sont prédéterminées pour le procédé.

**8.** Procédé selon l'une quelconque des revendications 5 à 7, dans lequel le facteur variable est ajusté afin d'être associé à son multiple et au facteur de réponse au niveau lors de l'analyse.

**9.** Procédé selon l'une quelconque des revendications 2 à 8, dans lequel l'analyse du spectre collecté peut comprendre un processus itératif, avec l'ajustement au sein d'un ensemble de facteurs variables, lequel est comparé avec l'ajustement au sein d'un ensemble différent de facteurs variables.

**10.** Procédé selon la revendication 9, dans lequel la comparaison est basée sur la qualité d'un test d'ajustement, tel qu'un test chi-carré, les comparaisons étant poursuivies avec des variations des valeurs des facteurs variables, jusqu'à ce que la différence entre les spectres générés et mesurés soit minimisée ou réduite au-dessous d'un seuil donné.

**11.** Procédé selon l'une quelconque des revendications 2 à 10, dans lequel les résultats de l'analyse sont une ou plusieurs valeurs d'énergie d'émission et une valeur d'intensité pour chaque valeur d'énergie d'émission, les résultats de l'analyse étant considérés comme le spectre émis.

**12.** Procédé selon l'une quelconque des revendications 1 à 11, dans lequel les emplacements et les intensités ou le spectre de la source sont transmis à un modèle informatique de l'environnement analysé.

**13.** Procédé selon l'une quelconque des revendications 1 à 12, dans lequel le procédé utilise des moyens de traitement ou un modèle pour déterminer la dose et/ou les débits de dose sur la base du calcul du comportement/de l'effet d'un grand nombre de photons provenant de chaque source en fonction de ses caractéristiques.

**14.** Procédé selon l'une quelconque des revendications 1 à 12, dans lequel le procédé utilise les moyens de traitement ou le modèle pour fournir une visualisation de l'environnement et/ou des emplacements source et/ou des types de source et/ou des informations de diagnostic concernant la source.

**15.** Procédé selon l'une quelconque des revendications 1 à 14, dans lequel le procédé utilise les moyens de traitement ou le modèle pour prendre en compte la forme et/ou la position relative et/ou l'effet d'écran et/ou l'effet d'atténuation et/ou l'effet de dissipation et/ou l'effet de diffusion de premier ordre et/ou l'effet de diffusion de second ordre des composants de l'environnement.

**16.** Procédé selon l'une quelconque des revendications 1 à 15, dans lequel le débit de dose à un emplacement est déterminé en additionnant la contribution de l'ensemble des spectres émis par les emplacements source déterminés à ce point.

**17.** Procédé selon l'une quelconque des revendications 1 à 16, dans lequel le débit de dose calculé pour une pluralité d'emplacements au sein de l'environnement est utilisé pour générer un contour ou d'autres tracés du débit de dose sur une partie ou sur la totalité de l'environnement.

**18.** Procédé selon l'une quelconque des revendications 1 à 17, dans lequel, de préférence, le détecteur gamma analyse un emplacement au sein de l'environnement et analyse ensuite d'autres emplacements au sein de l'environnement avec un nombre plus important d'emplacements, lequel est échantillonné au niveau de ou vers l'équateur du balayage du détecteur, qu'au niveau de ou vers les pôles du balayage du détecteur.

**19.** Procédé selon la revendication 18, dans lequel un mouvement d'inclinaison et de panoramique est prévu pour le détecteur et le collimateur, dans lequel le nombre d'emplacements analysés dans la direction du panoramique à différents angles d'inclinaison est proportionnel au cosinus de l'angle d'inclinaison, et/ou dans lequel le nombre d'emplacements analysés dans la direction du panoramique, à un angle d'inclinaison donné, varie d'un maximum au niveau de l'équateur à un à zéro emplacement(s) au niveau du ou des pôles.

**20.** Procédé selon l'une quelconque des revendications 1 à 19, dans lequel la position de l'emplacement est déterminée en trois dimensions, l'emplacement étant déterminé par la position d'inclinaison et de panoramique du détecteur gamma et en termes de distance de l'emplacement par rapport au détecteur gamma.

**21.** Appareil de détermination de dose ou de débit de dose pour un ou plusieurs emplacement(s) sélectionné(s) au sein d'un environnement, l'appareil comprenant :

a) des moyens pour mesurer une énergie et un taux de comptage d'un rayon gamma incident provenant d'une ou plusieurs sources, pour une ou plusieurs parties visualisées de l'environnement, à un ou plusieurs emplacements mesurés au sein de l'environnement, l'appareil obtenant un spectre mesuré pour les emplacements mesurés à partir de ces informations ;
b) des moyens pour mesurer la position spatiale des emplacements mesurés ;
c) des moyens de calcul pour déterminer un spectre émis pour chaque partie visualisée de l'environnement, à partir du spectre mesuré pour chaque partie visualisée de l'environnement ;
d) des moyens de traitement adaptés pour recevoir des entrées correspondant au spectre émis et des informations relatives aux emplacement mesurés ; et
e) des moyens de calcul pour déterminer le débit de dose à un ou plusieurs emplacement(s) sélectionné(s) à partir de l'énergie calculée du rayon gamma incident auxdits emplacements sélectionnés et provenant du spectre émis par une ou plusieurs source(s).

FIG. 1

| RadScan 600  Form at 1.0a | | | | | | | |
|---|---|---|---|---|---|---|---|
| Pan Pts | Tilt Pts | Pan Pitch | Tilt Pitch | Start Pan | Start Tilt | | |
| 10 | 9 | 2.6 | 2.6 | -10.9 | -11.5 | | |
| | | | | | | | |
| point | pan | tilt | range | counter | roi 1 | roi 2 | roi 3 |
| 1 | -11 | 11.7 | 0.7 | 15 | 313 | 72 | 3 |
| 2 | -8.4 | 11.7 | 1.2 | 26 | 353 | 85 | 4 |
| 3 | -5.7 | 11.7 | 1.4 | 37 | 351 | 83 | 3 |
| 4 | -3.1 | 11.7 | 1.6 | 46 | 363 | 115 | 4 |
| 5 | -0.6 | 11.7 | 1.6 | 57 | 319 | 98 | 3 |
| 6 | 2 | 11.7 | 1.6 | 262 | 338 | 89 | 4 |
| 7 | 4.7 | 11.7 | 1.5 | 273 | 369 | 91 | 3 |
| 8 | 7.3 | 11.7 | 1.5 | 281 | 304 | 84 | 4 |
| 9 | 9.8 | 11.7 | 1.5 | 292 | 265 | 75 | 3 |
| 10 | 12.5 | 11.7 | 1.5 | 301 | 274 | 77 | 3 |
| 11 | 12.5 | 9.1 | 1.5 | 310 | 201 | 60 | 2 |
| 12 | 10 | 9.1 | 1.5 | 515 | 205 | 54 | 3 |
| 13 | 7.4 | 9.1 | 1.5 | 524 | 311 | 67 | 3 |
| 14 | 4.8 | 9 | 1.5 | 532 | 451 | 80 | 3 |
| 15 | 2.2 | 9.1 | 1.6 | 541 | 339 | 88 | 2 |
| 16 | -0.4 | 9 | 1.6 | 550 | 316 | 90 | 3 |
| 17 | -3 | 9 | 1.7 | 559 | 365 | 87 | 4 |

FIG.    2

EP 0 981 765 B1

The difference between a Cs-137 spectrum as measured by the RadScan 600 and as emitted from the isotope

Note that the areas of the two graphs are not normalised. This plot only shows the difference in shape.

Measured
Emitted

FIG.    3

EP 0 981 765 B1

FIG. 4

FIG. 5

Response Function for 1200-1300 keV, derived from MCNP using a 1250 keV gamma ray source

_FIG. 6_

The complete set of response functions as derived using MCNP

FIG. 7

Counts per incident photon

Stripped energy (keV)

Incident energy (keV)

EP 0 981 765 B1

Number of slices found : 1
Plotting slice 1
Slice identifier no : 1

X 514624.76 section

EXIT
PLOT
C LEVEL

FIG. 8

μSv/hr

0.1000E 09
0.1000E 08
0.1000E 07
0.1000E 06
0.1000E 05
0.1000E 04
0.1000E 03
0.1000E 02
0.1000E 01

EP 0 981 765 B1

FIG. 9

FIG. 10

FIG. 11

EP 0 981 765 B1

FIG. 12

FIG. 13

FIG. 14

EP 0 981 765 B1

FIG. 15

FIG. 16

FIG. 17

FIG. 18

FIG. 19

FIG. 20